# EUROPÄISCHE PATENTSCHRIFT

(11) **EP 1 297 079 B1**
(45) Veröffentlichungstag und Bekanntmachung des Hinweises auf die Patenterteilung: **14.12.2005**
(21) Anmeldenummer: 01955317.1
(22) Anmeldetag: 20.06.2001
(51) Int. Cl.: C09D 5/02, C09D 7/12

(54) **KONSERVIERUNGSMITTELFREIE DISPERSIONSFARBE**
PRESERVATIVE-FREE DISPERSION PAINT
PEINTURE DE DISPERSION EXEMPTE DE CONSERVATEUR

(30) Priorität: 21.06.2000 DE 10030447
(43) Veröffentlichungstag der Anmeldung: 02.04.2003
(73) Patentinhaber: DEUTSCHE AMPHIBOLIN-WERKE VON ROBERT MURJAHN GmbH + Co. KG, 64372 Ober-Ramstadt (DE)
(72) Erfinder: BEFURT, Uwe, 64372 Ober-Ramstadt (DE); BRENNER, Thomas, 64367 Mühltal (DE); PLATZEK, Ulrich, 64625 Bensheim (DE)
(74) Vertreter: Pfenning, Meinig & Partner GbR
(86) Internationale Anmeldenummer: PCT/EP2001/006969
(87) Internationale Veröffentlichungsnummer: WO 2002/000798

(56) Entgegenhaltungen:
- GB-A- 1 285 479
- DATABASE WPI Section Ch, Week 200013 Derwent Publications Ltd., London, GB; Class A26, AN 2000-146157 XP002182690 & RU 2 121 486 C (TOPAZ SMALL STATE ENTERPRISE), 10. November 1998 (1998-11-10)
- DATABASE WPI Section Ch, Week 198917 Derwent Publications Ltd., London, GB; Class A12, AN 1989-128364 XP002182691 & SU 1 432 079 A (PROGRESS PRODN COMB), 23. Oktober 1988 (1988-10-23)

## Beschreibung

Für mineralische Untergründe sind nach DIN 18363 verschiedene Beschichtungssysteme einsetzbar. Man unterscheidet dabei u.a. Silikatfarben, Dispersions-Silikatfarben und Kunststoffdispersionsfarben.

Die Silikatfarben bestehen aus Kaliwasserglas und kaliwasserglasbeständigen Pigmenten als Zweikomponentenfarbe. Diese Silikatfarben dürfen keine organischen Bestandteile enthalten. Das Kaliwasserglas stellt im Falle der Silikatfarben das Bindemittel dar. Der pH-Wert der reinen Zweikomponenten-Silikatfarben liegt gewöhnlicherweise im Bereich um 13. Durch diese stark alkalische Einstellung weisen diese Silikatfarben auch zum Teil eine fungizide Wirkung auf.

Nachteilig bei den Silikatfarben ist allerdings, daß durch die Alkalität nur noch unter Beachtung der Arbeitsschutzregeln für stark alkalische Flüssigkeiten gearbeitet werden kann. Auch ist die Handhabung einer Zweikomponentenfarbe für viele Anwendungsfälle ungünstig.

Die zweite Gruppe von Beschichtungssystemen für mineralische Untergründe sind die Dispersions-Silikatfarben. Die Dispersions-Silikatfarben bestehen aus Kaliwasserglas mit kaliwasserglasbeständigen Pigmenten, Zusätzen von Hydrophobierungsmittel und maximal 5 % Masse-Anteil organischer Bestandteile, bezogen auf die Gesamtmenge des Beschichtungsstoffes. Den Zweck den die Kunstharzdispersion dabei in dem Wasserglassystem erfüllen soll, ist primär die Stabilität und Lagerbeständigkeit dieser Farbsysteme zu gewährleisten. Durch den Zusatz von Polymerdispersionen wird jedoch zugleich die Handhabung und die Verarbeitbarkeit der Farbe verbessert.

Die Dispersions-Silikatfarbe hat zwar gegenüber der Silikatfarbe den Vorteil, daß es sich hier um ein Einkomponentensystem handelt, jedoch weist auch die Dispersions-Silikatfarbe einen pH-Wert auf, der im Bereich der der Zweikomponenten-Silikatfarbe liegt. Danach sind auch für die Dispersions-Silikatfarben die Arbeitsschutzbestimmungen für stark alkalische Flüssigkeiten zu beachten. Durch den Zusatz der Kunstharzdispersion wird zwar die Handhabung und die Verarbeitung der Silikatfarbe verbessert ohne jedoch die guten und sicheren Verarbeitungseigenschaften von Dispersionsfarben zu erreichen.

Kunststoffdispersionsfarben (Dispersionsfarben) bestehen nach der DIN 18363 aus einer Kunststoffdispersion mit Pigmenten und Füllstoffen. Bei der Kunststoffdispersionsfarbe ist es deshalb erforderlich, daß entsprechende Konservierungsstoffe, normalerweise Isothiazolinone oder Formaldehydabspalter hinzugefügt werden, um eine entsprechende Konservierung zu erhalten. Der Zusatz der Konservierungsstoffe sorgt gleichzeitig auch für eine Stabilisierung.

Nachteilig bei diesen reinen Dispersionsfarben ist dabei, daß die bisher im Stand der Technik bekannten Konservierungsmittel meist für Allergiker nicht verträglich sind.

Ausgehend hiervon ist es deshalb die Aufgabe der vorliegenden Erfindung, eine reine Dispersionsfarbe vorzuschlagen, die ohne Konservierungsstoffe auskommt und die gleichzeitig die von den Dispersionsfarben bisher bekannten guten und sicheren Verarbeitungseigenschaften besitzt. Die Dispersionsfarbe soll auch eine befriedigende Lagerstabilität aufweisen.

Die Erfindung wird durch die kennzeichnenden Merkmale des Patentanspruches 1 gelöst. Eine bevorzugte Verwendung ist in Anspruch 11 angegeben. Die Unteransprüche zeigen vorteilhafte Weiterbildungen auf.

Erfindungsgemäß besteht somit die Dispersionsfarbe aus 4-15 Gew.-% Polymerdispersion, 10-55 Gew.-% Pigment und/oder Füllstoff, max. 2 Gew.-% Wasserglas als Additiv sowie zu 100 Gew.-% ergänzte Anteile an Wasser.

Die erfindungsgemäße konservierungsmittelfreie Dispersionsfarbe zeichnet sich somit dadurch aus, daß sie keinerlei Konservierungsstoffe, wie sie sonst normalerweise in Dispersionsfarben zugesetzt werden, enthält und daß sie trotzdem eine ausgezeichnete Lagerstabilität aufweist. Die Anmelderin konnte zeigen, daß die Dispersionsfarbe nach der Erfindung die ja lediglich einen Wasserglasanteil von max. 2 Gew.-% enthält, eine Lagerstabilität von mindestens 6 Monaten besitzt. Der geringe Zusatz an Wasserglas übernimmt dabei sowohl die Funktion als Stabilisator wie auch für die Konservierung. Die Dispersionsfarbe nach der Erfindung weist auch alle bisher für Dispersionsfarben bekannten Eigenschaften in bezug auf gute und sichere Verarbeitungseigenschaften auf.

Es hat sich herausgestellt, daß die erfindungsgemäße Dispersionsfarbe selbst sogar bei einer Zugabe von maximal 1,5 Gew.-% Wasserglas die vorstehend beschriebenen Eigenschaften beibehält.

Die Dispersionsfarbe nach der Erfindung ist auf einen pH-Bereich von 8,5-12 eingestellt. Besonders bevorzugt ist der pH-Bereich von 9-11. Die Einstellung des pH-Wertes erfolgt primär durch das zugesetzte Wasserglas und ggf. durch Zugabe von KOH. Wenn Alkalihydroxid, z.B. KOH verwendet wird, wird dieses bevorzugt in einer Menge von 0,05 bis 0,15 Gew.-% zugegeben. Vorteilhaft wird jedoch eine entsprechende Lösung verwendet, wie z.B. 1,0 Gew.-% einer 10 %igen Lösung Wasserglas erfüllt somit in der Formulierung nach der Erfindung nicht nur die Aufgabe des Stabilisators und Konservierungsmittel sondern dient auch zur Einstellung des pH-Wertes auf 8,5-12, bevorzugt auf 9-11.

Unter Wasserglas gemäß der Erfindung werden reaktionsprodukte aus Alkalikarbonat (-Hydroxyd) mit Quarzsand und daraus hergestellten Lösungen unterschiedlicher Konzentrationen verstanden. Technische Bedeutung haben dabei Natrium- und Kaliumwasserglas sowie Lithiumwasserglas. Für die erfindungsgemäße Dispersionsfarbe haben sich jedoch insbesondere Kaliumsilikate als Lösungen oder Hydrate bewährt. Von den Kaliumsilikaten sind wiederum solche mit einem Molverhältnis SiO₂:K₂O von > 2,6 ≤ 3,2 bevorzugt.

Bei den Polymerdispersionen die in der Erfindung mit 4-15 Gew.-%, bevorzugt 8-12 Gew.-%, gerechnet als Feststoffanteil in der Formulierung enthalten sind, können alle an und für sich aus dem Stand der Technik bisher bekannten Polymerdispersionen auf dem Gebiet der Dispersionssilikatsysteme verwendet werden. Das Eigenschaftsbild der Dispersion, aber auch der daraus hergestellten Fertigprodukte wird dabei überwiegend vom jeweiligen Polymerisat geprägt. Dabei ist das Polymer aus verschiedenen Bausteinen, den sog. Monomeren, die je nach den gewünschten Eigenschaftsprofil auch miteinander kombiniert werden können, aufgebaut. Geeignete Monomere sind beispielsweise Carbonsäurevinylester mit 3 bis 20 Kohlenstoffatomen, insbesondere Vinylacetat, Vinylpropionat und Carbonsäurevinylester mit 9 bis 11 Kohlenstoffatomen in der Carbonsäurekomponente, weiterhin N-Vinylpyrrolidon und dessen Derivate, ethylenisch ungesättigte Carbonsäuren, deren Ester, deren Amide oder deren Anhydride, weiterhin α-Olefine, insbesondere Ethylen und Propylen sowie Acrylnitril. Besonders bevorzugt ist die Verwendung ethylenisch ungesättigter Carbonsäuren, insbesondere von Acryl- und Methacrylsäure, weiterhin von ethylenisch ungesättigten Carbonsäureestern, insbesondere von Acryl- und Methacrylsäureestern mit 1 bis 12 Kohlenstoffatomen im Alkoholrest. Der Alkoholrest der Ester kann aus linearen oder verzweigten Alkylketten, Cycloaliphaten oder Aromaten bestehen, die zusätzlich mit Hydroxylgruppen, Halogenatomen oder Epoxidgruppen modifiziert sein können. Besonders bevorzugt ist auch der Einsatz von Styrol und Styrolderivaten.

Die konservierungsmittelfreie Dispersionsfarbe enthält neben der Polymerdispersion und dem Wasserglas 10-55 Gew.-% Pigment und/oder Füllstoff. Bevorzugt ist es hierbei, wenn die Dispersionsfarbe 10-35 Gew.-% Pigmente und/oder 10-35 Gew.-% Füllstoffe enthält.

Aus stofflicher Sicht sind bei den Pigmenten Titandioxid, Eisenoxid, Chromoxid, Kobaltblau, Phtalocyaninpigment, Spinellpigment und Nickel- und Chromtitanat bevorzugt. Bei den Füllstoffen sind besonders günstig Silikate, Carbonate, Flußspat, Sulfate und Oxide.

Die erfindungsgemäße Dispersionsfarbe kann selbstverständlich noch weitere Additive wie Dispergiermittel, Verdickungsmittel, Stabilisator, Entschäumer und/oder Hydrophobierungsmittel enthalten.

Die Erfindung betrifft weiterhin die Verwendung der vorstehend beschriebenen Dispersionsfarbe für die Anwendung im Innenbereich. Die Vorteile der erfindungsgemäßen Farbe kommen besonders im Innenbereich zu tragen.

Bei durchgeführten Tests hat sich gezeigt, daß die erfindungsgemäße Farbe neben der Konservierungsmittelfreiheit zusätzlich auch bei einer Beschichtung auf Substraten zu einer Reduktion von Emissionen, insbesondere von organischen Verbindungen und Formaldehyd, führt, so daß sie weit unter den festgelegten Grenzwerten liegen. Die Farbe ist deshalb auch für Allergiker bestens geeignet.

Die Erfindung wird nachfolgend durch zwei beispielhafte Fomulierungen näher beschrieben (Angaben in Gew.-%):

| | KF1 | KF2 |
|---|---|---|
| Polymerdispersion (Styr.acryl) | 8,5 | 9,5 |
| Pigment (Titandioxid) | 10 | 20 |
| Füllstoff | 30 | 20 |
| Wasserglas | 1,4 | 1,4 |
| Additive | 1,5 | 1,5, |
| Alkalihydroxid | 1,0* | 1,0* |
| Wasser | 47,6 | 46,6 |

| | | |
|---|---|---|
| * Gew.-% einer 10 %-Lösung | | |

Die Dispersion KF1 und KF2 zeigt eine Lagerstabilität > 6 Monate und sind ausgezeichnet verarbeitungsfähig.

## Patentansprüche

1. Konservierungsmittelfreie Dispersionsfarbe enthaltend,
a) 4-15 Gew.-% Polymerdispersion gerechnet als Feststoffanteil,
b) 10-55 Gew.-% Pigment und/oder Füllstoff sowie
c) maximal 2 Gew.-% Wasserglas als Additiv und zu 100 Gew.-% ergänzte Anteile an Wasser.

2. Dispersionsfarbe nach Anspruch 1, **dadurch gekennzeichnet, daß** sie max. 1,5 Gew.-% Wasserglas enthält.

3. Dispersionsfarbe nach Anspruch 1 oder 2, **dadurch gekennzeichnet, daß** ihr pH-Wert auf 8,5-12 eingestellt ist.

4. Dispersionsfarbe nach Anspruch 3, **dadurch gekennzeichnet, daß** der pH-Wert auf 9-11 eingestellt ist.

5. Dispersionsfarbe nach Anspruch 3 oder 4, **dadurch gekennzeichnet, daß** der pH-Wert mittels eines Alkalihydroxids eingestellt worden ist.

6. Dispersionsfarbe nach mindestens einem der Ansprüche 1 bis 5, **dadurch gekennzeichnet, daß** sie als weitere Additive Dispergier-, Verdickungsmittel, Stabilisatoren, Entschäumer und/oder Hydrophobierungsmittel enthält.

7. Dispersionsfarbe nach mindestens einem der Ansprüche 1 bis 6, **dadurch gekennzeichnet, daß** die Polymerdispersion ausgewählt ist aus Polymeren, die aus den Monomeren, Carbonsäurevinylester mit 3-20 C-Atomen, N-Vinylpyrrolidon, ethylenisch ungesättigte Carbonsäuren, deren Ester, deren Amide oder deren Anhydride und/oder α-Olefine, erhalten worden ist.

8. Dispersionsfarbe nach mindestens einem der Ansprüche 1 bis 7, **dadurch gekennzeichnet, daß** die Pigmente ausgewählt sind aus Titandioxid, Eisenoxid, Chromoxid, Kobaltblau, Phtalocyaninpigmente, Spinellpigment und Nickel- und Chromtitanat.

9. Dispersionsfarbe nach mindestens einem der Ansprüche 1 bis 8, **dadurch gekennzeichnet, daß** die Füllstoffe ausgewählt sind aus Silikaten, Karbonaten, Flußspat, Sulfaten und Oxiden.

10. Dispersionsfarben nach mindestens einem der Ansprüche 1 bis 9, **dadurch gekennzeichnet, daß** sie
a) 8-12 Gew.-% Polymerdispersion
b) 10-35 Gew.-% Pigmente
c) 10-35 Gew.-% Füllstoffe
d) max. 1,5 Gew.-% Wasserglas
e) 0,05-0,15 Gew.-% Alkalihydroxid
sowie zu 100 Gew.-% ergänzte Anteile an Wasser enthält.

11. Verwendung der Dispersionsfarbe nach einem der Ansprüche 1 bis 10, im Innenbereich.

## Claims

1. Preservative-free emulsion paint containing
a) 4-15 wt.% of polymer dispersion, calculated as the solids content,
b) 10-55 wt.% of pigment and/or filler and
c) a maximum of 2 wt.% of water-glass as an additive and contents of water to make up to 100 wt.%.

2. Emulsion paint according to claim 1, **characterized in that** it contains max. 1.5 wt.% of water-glass.

3. Emulsion paint according to claim 1 or 2, **characterized in that** its pH is adjusted to 8.5-12.

4. Emulsion paint according to claim 3, **characterized in that** the pH is adjusted to 9-11.

5. Emulsion paint according to claim 3 or 4, **characterized in that** the pH has been adjusted by means of an alkali metal hydroxide.

6. Emulsion paint according to at least one of claims 1 to 5, **characterized in that** it contains as further additives dispersing agents, thickeners, stabilizers, defoamers and/or hydrophobizing agents.

7. Emulsion paint according to at least one of claims 1 to 6, **characterized in that** the polymer dispersion is chosen from polymers which have been obtained from the monomers: carboxylic acid vinyl esters having 3-20 C atoms, N-vinylpyrrolidone, ethylenically unsaturated carboxylic acids, esters thereof, amides thereof or anhydrides thereof and/or α-olefins.

8. Emulsion paint according to at least one of claims 1 to 7, **characterized in that** the pigments are chosen from titanium dioxide, iron oxide, chromium oxide, cobalt blue, phthalocyanine pigments, spinel pigment and nickel and chromium titanate.

9. Emulsion paint according to at least one of claims 1 to 8, **characterized in that** the fillers are chosen from silicates, carbonates, fluorspar, sulphates and oxides.

10. Emulsion paint according to at least one of claims 1 to 9, **characterized in that** it comprises
a) 8-12 wt.% of polymer dispersion
b) 10-35 wt.% of pigments
c) 10-35 wt.% of fillers
d) max. 1.5 wt.% of water-glass
e) 0.05-0.15 wt.% of alkali metal hydroxide
and contents of water to make up to 100 wt.%.

11. Use of the emulsion paint according to one of claims 1 to 10 indoors.

## Revendications

1. Peinture de dispersion exempte de conservateurs, contenant
a) de 4 à 15% en poids de dispersion de polymère, ramené aux solides,
b) de 10 à 55% en poids de pigment et/ou de matière de charge, ainsi que
c) au maximum 2% en poids de verre soluble comme additif, et de l'eau pour compléter à 100% en poids.

2. Peinture de dispersion selon la revendication 1, **caractérisée en ce qu'**elle contient au maximum 1,5% en poids de verre soluble.

3. Peinture de dispersion selon la revendication 1 ou la revendication 2, **caractérisée en ce que** son pH est ajusté à une valeur de 8,5 à 12.

4. Peinture de dispersion selon la revendication 3, **caractérisée en ce que** le pH est ajusté à une valeur de 9 à 11.

5. Peinture de dispersion selon la revendication 3 ou la revendication 4, **caractérisée en ce que** le pH a été ajusté au moyen d'un hydroxyde de métal alcalin.

6. Peinture de dispersion selon l'une au moins des revendications 1 à 5, **caractérisée en ce qu'**elle contient comme autres additifs des agents dispersants, des agents épaississants, des agents stabilisants, des agents antimousse et/ou des agents hydrophobisants.

7. Peinture de dispersion selon l'une au moins des revendications 1 à 6, **caractérisée en ce que** la dispersion de polymère est choisie parmi des polymères qui ont été obtenus à partir des monomères esters vinyliques d'acides carboxyliques ayant de 3 à 20 atomes de carbone, N-vinylpyrrolidone, acides carboxyliques éthyléniquement insaturés, leurs esters, leurs amides ou leurs anhydrides et/ou α-oléfines.

8. Peinture de dispersion selon l'une au moins des revendications 1 à 7, **caractérisée en ce que** les pigments sont choisis parmi le dioxyde de titane, l'oxyde de fer, l'oxyde de chrome, le bleu de cobalt, des pigments à base de phtalocyanine, le pigment spinelle et le titanate de nickel et de chrome.

9. Peinture de dispersion selon l'une au moins des revendications 1 à 8, **caractérisée en ce que** les matières de charge sont choisies parmi des silicates, des carbonates, le spath fluor, des sulfates et des oxydes.

10. Peinture de dispersion selon l'une au moins des revendications 1 à 9, **caractérisée en ce qu'**elle contient
a) de 8 à 12% en poids de dispersion de polymère
b) de 10 à 35% en poids de pigments
c) de 10 à 35% en poids de matières de charge
d) au maximum 1,5% en poids de verre soluble
e) de 0,05 à 0,15% en poids d'hydroxyde de métal alcalin ainsi que de l'eau pour compléter à 100% en poids.

11. Utilisation de la peinture de dispersion selon l'une des revendications 1 à 10 dans le domaine intérieur.
